# DEMANDE DE BREVET EUROPEEN

(11) **EP 1 862 282 A1**
(43) Date de publication de la demande: **05.12.2007**
(21) Numéro de dépôt: 06114913.4
(22) Date de dépôt: 02.06.2006
(51) Int. Cl.: B29C 31/00, B29D 23/20, B65B 43/50, B65G 47/84

(54) **Unité d'assemblage de composants de tubes**

(71) Demandeur: Aisapack Holding SA, 1896 Vouvry (CH)
(72) Inventeur: Voigtmann, Jean-Pierre, 1893, Muraz (CH)
(74) Mandataire: Grosfillier, Philippe

(57) **Abrégé**

Unité d'assemblage de composants de tubes, en particulier pour assembler des épaules avec des jupes; ladite unité d'assemblage étant constituée d'au moins un mandrin adapté pour supporter au moins un composant de tube, ladite unité d'assemblage étant caractérisée par le fait qu'elle comprend un élément en forme de tourelle (1) verticale montée rotative autour de son axe de symétrie (8), ainsi que plusieurs séries de mandrins (2) rendus solidaires de la tourelle (1), chaque série étant disposée dans un même plan qui est perpendiculaire à l'axe (8) de la tourelle (1) et chaque mandrin (2) de ladite série étant dirigé selon une direction radiale (9) par rapport à l'axe (8) de la tourelle (1), les séries de mandrins (2) étant superposées et formant un empilement le long de l'axe de symétrie de la tourelle (1).

## Description

### Domaine de l'invention

La présente invention se situe dans le domaine des emballages en forme de tube qui comprennent une épaule et/ou une jupe.
Elle concerne plus précisément l'assemblage des composants de tube.

### Etat de la technique

On connaît divers dispositifs qui permettent d'assembler des composants de tubes, par exemple pour le soudage d'une épaule de tube à une jupe.
Un dispositif d'assemblage couramment utilisé est constitué d'un plateau rotatif sur lequel sont disposés des mandrins destinés à recevoir temporairement des composants de tubes, p.ex. des jupes.
Si l'on souhaite traiter simultanément plusieurs tubes, les dimensions du dispositif d'assemblage, en particulier la surface qu'il occupe sur le sol, peuvent devenir très importantes.

Il existe donc un besoin de réduire l'encombrement, principalement selon un plan horizontal, des dispositifs d'assemblage de l'état de la technique.

### Résumé de l'invention

La présente invention vise notamment à remédier au problème précité.

Elle concerne une Unité d'assemblage de composants de tubes, en particulier pour assembler des épaules avec des jupes; ladite unité d'assemblage étant constituée d'au moins un mandrin adapté pour supporter au moins un composant de tube, ladite unité d'assemblage étant caractérisée par le fait qu'elle comprend un élément en forme de tourelle verticale montée rotative autour de son axe de symétrie, ainsi que plusieurs séries de mandrins rendus solidaires de la tourelle, chaque série étant disposée dans un même plan qui est perpendiculaire à l'axe de la tourelle et chaque mandrin de ladite série étant dirigé selon une direction radiale par rapport à l'axe de la tourelle, les séries de mandrins étant superposées et formant un empilement le long de l'axe de symétrie de la tourelle.

L'unité selon l'invention peut être intégrée dans une installation d'assemblage de composants de tubes.

Selon un premier mode de réalisation de l'invention, chaque série de mandrins forme un plan qui s'étend selon une direction perpendiculaire à l'axe de symétrie de la tourelle.

Avantageusement, chaque mandrin est monté mobile selon une direction qui se confond avec son axe de symétrie. En rendant les mandrins mobiles, les stations de travail, p.ex. pour le soudage d'une épaule sur une jupe, peuvent être statiques, ce qui a pour conséquence de réduire considérablement la masse en mouvement et de diminuer les contraintes exercées sur des pièces telles que câbles, flexibles, connectique, etc... qui alimentent et sont entraînés avec des stations de travail.

L'unité de transfert selon l'invention peut donc être intégrée dans une installation d'assemblage de composants de tubes qui comprend en outre une station de travail fixe qui est adaptée pour recevoir et traiter simultanément plusieurs jupes.

Selon une variante de l'invention, chaque mandrin est monté mobile de manière à pouvoir déposer ou reprendre des jupes dans la station de travail.

L'invention concerne également l'utilisation d'une unité d'assemblage de composants de tubes telle que décrite précédemment.

L'utilisation se caractérise essentiellement par les étapes suivantes :
- disposition des jupes sur les mandrins
- traitement des composants de tube par déplacement des mandrins et/ou rotation de la tourelle et par insertion et/ou retrait desdits composants dans des stations de travail,
- retrait des composants de tubes de la tourelle.

L'invention sera mieux comprise ci-après au moyen d'une description détaillée et d'exemples non-limitatifs illustrés par des figures.

### Brève description des figures

La figure 1 représente un exemple de tourelle de transfert selon l'invention.

La figure 2 représente une tourelle selon l'invention avec des mandrins rétractables, ces derniers étant en contact avec une station de travail.

La figure 3 représente le même ensemble que celui de la figure 2 mais avec des mandrins rétractés.

La figure 4 illustre la rotation de la tourelle des figures 2 et 3.

### Liste des références numériques utilisées dans les figures

1. Tourelle
2. Mandrin
3. Bloc de mandrins
4. Station de travail
5. Bielle
6. Arbre de commande
7. Base de la tourelle
8. Axe de symétrie de la tourelle
9. Axe de symétrie des mandrins

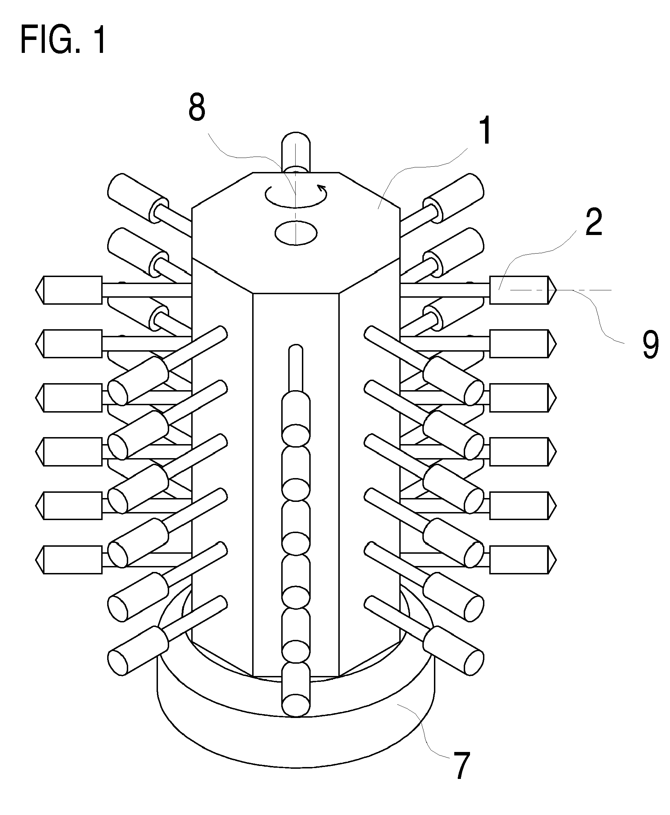

La tourelle 1 illustrée sur la figure 1 comporte un bloc central vertical à section octogonale. Chaque face de la tourelle comporte un groupe de mandrins 2 distribués verticalement qui s'étendent selon des directions 9 perpendiculaires à l'axe de symétrie de la tourelle 1. Les mandrins 2 sont en outre regroupés par séries selon un plan horizontal et forme de la sorte un empilement ou, exprimé différemment, une succession d'étages.

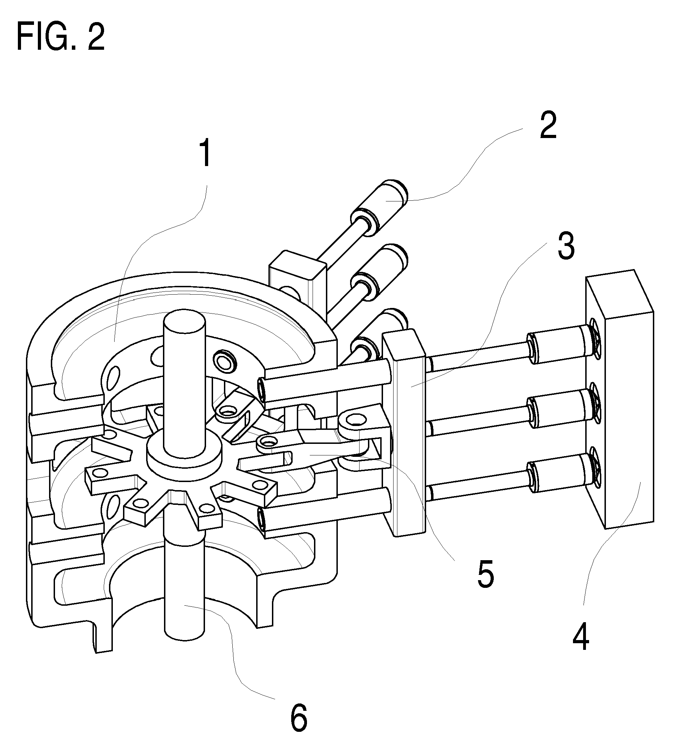

Les figures 2 à 4 illustrent une variante de l'invention dans laquelle les mandrins 2 sont montés mobiles selon une direction 9 qui se confond avec leurs axes de symétrie respectifs.
Le déplacement des mandrins 2 est assuré par un système comprenant des bielles 5 qui sont entraînées par l'arbre de commande 6 de la tourelle 1.

Dans la position illustrée sur la figure 2, les mandrins 2 sont en contact avec une station de travail, p.ex. pour le soudage d'une épaule sur une jupe (non-illustré).

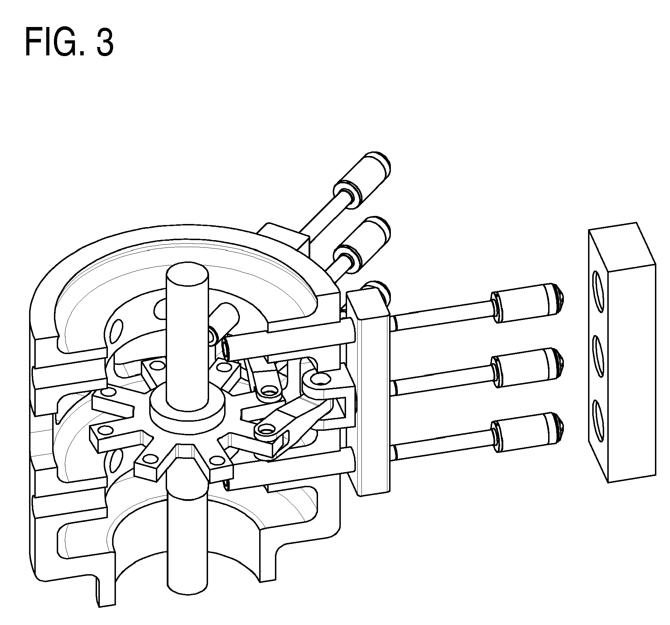

Dans la position illustrée sur la figure 3, les mandrins 2 sont rétractés.

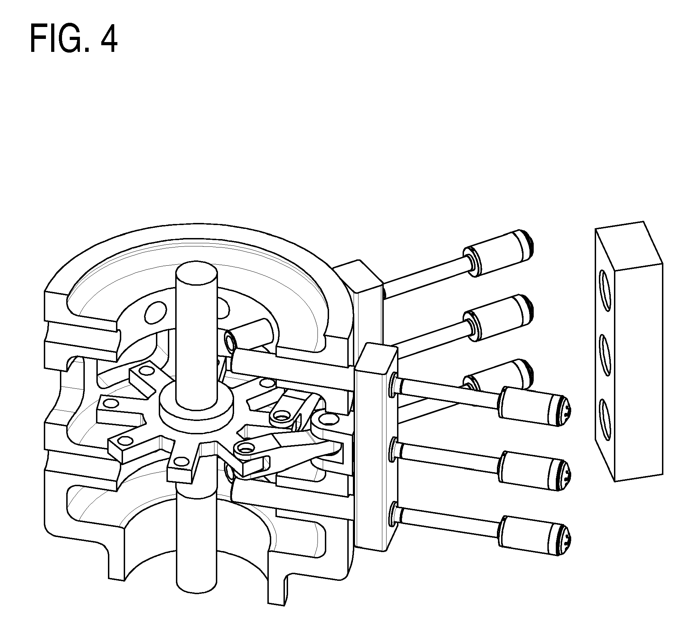

La figure 4 illustre le déplacement angulaire d'un groupe de mandrins 2.

Il va de soi que l'invention ne se limite pas aux exemples illustrés décrits précédemment.

La section de la tourelle peut être de forme quelconque, polygonale ou circulaire.
La distribution des mandrins peut également être quelconque.
La rotation de la tourelle est de préférence indexée mais elle peut être continue.

Plus généralement, l'invention couvre n'importe quel type de tourelle telle que définie dans les revendications.

## Revendications

1. Unité d'assemblage de composants de tubes, en particulier pour assembler des épaules avec des jupes; ladite unité d'assemblage étant constituée d'au moins un mandrin adapté pour supporter au moins un composant de tube, ladite unité d'assemblage étant **caractérisée par le fait qu'**elle comprend un élément en forme de tourelle (1) verticale montée rotative autour de son axe de symétrie (8), ainsi que plusieurs séries de mandrins (2) rendus solidaires de la tourelle (1), chaque série étant disposée dans un même plan qui est perpendiculaire à l'axe (8) de la tourelle (1) et chaque mandrin (2) de ladite série étant dirigé selon une direction radiale (9) par rapport à l'axe (8) de la tourelle (1), les séries de mandrins (2) étant superposées et formant un empilement le long de l'axe de symétrie de la tourelle (1).

2. Unité d'assemblage selon la revendication 1 **caractérisée en ce que** chaque mandrin (2) est monté mobile selon une direction qui se confond avec son axe de symétrie (9).

3. Installation d'assemblage comprenant une unité d'assemblage selon la revendication 1 ou 2 et au moins une station de travail fixe (4) qui est adaptée pour recevoir et traiter simultanément plusieurs composants de tubes.

4. Utilisation d'une unité d'assemblage de composants de tubes selon la revendication 2 **caractérisée par** les étapes suivantes :
- disposition des jupes sur les mandrins,
- traitement des composants de tube par déplacement des mandrins (2) et/ou rotation de la tourelle (1) et par insertion et/ou retrait desdits composants dans des stations de travail (4),
- retrait des composants de tubes de la tourelle (1).
